# EUROPÄISCHE PATENTANMELDUNG

(11) **EP 1 445 388 A2**
(43) Veröffentlichungstag der Anmeldung: **11.08.2004**
(21) Anmeldenummer: 04001763.4
(22) Anmeldetag: 28.01.2004
(51) Int. Cl.: E04B 1/24

(54) **Rohrkonstruktion**

(30) Priorität: 04.02.2003 DE 20301743 U
(71) Anmelder: Träger, Horst, 56355 Münchenroth (DE)
(72) Erfinder: Träger, Horst, 56355 Münchenroth (DE)
(74) Vertreter: Kampfenkel, Klaus, Dipl.-Ing.

(57) **Zusammenfassung**

Die Erfindung betrifft eine Rohrkonstruktion, insbesondere zur Verwendung bei einer Trägerkonstruktion, beispielsweise bei einem Schilderhalter oder als Unterkonstruktion für Möbel oder als Geländer.

Eine Aufgabe der Erfindung ist es, eine neue und vielseitig anwendbare Rohrkonstruktion mit wenigstens zwei miteinander verbundenen Rohren bereitzustellen.

Die Erfindung schlägt zur Lösung eine Rohrkonstruktion vor, die gekennzeichnet ist durch wenigstens ein Rohr (10) mit wenigstens einer Aussparung (11), die quer, insbesondere senkrecht zur Längsachse (A) des Rohres (10) durch dessen Rohrummantelung eingearbeitet ist und durch welche der Endbereich (22) eines zweiten Rohres (20) im Wesentlichen formschlüssig bis zur Anlage an einen stehen gelassenen Bereich (12) des Materials der Rohrummantelung eingeführt ist.

## Beschreibung

Die Erfindung betrifft eine Rohrkonstruktion, insbesondere zur Verwendung bei einer Trägerkonstruktion, beispielsweise bei einem Schilderhalter oder als Unterkonstruktion für Möbel oder als Geländer.

Eine Aufgabe der Erfindung ist es, eine neue und vielseitig anwendbare Rohrkonstruktion mit wenigstens zwei miteinander verbundenen Rohren bereitzustellen.

Die erfindungsgemäße Lösung der Aufgabe ist auf höchst überraschende Weise durch eine Rohrkonstruktion mit den Merkmalen des angehängten Schutzanspruchs 1, durch eine Trägervorrichtung mit den Merkmalen des angehängten Schutzanspruchs 14 oder 15 sowie durch ein Flüssigkeitsleitungssystem mit den Merkmalen des angehängten Schutzanspruchs 16 gegeben.

Gemäß der Erfindung ist somit eine Rohrkonstruktion vorgeschlagen, die gekennzeichnet ist durch wenigstens ein Rohr (10) mit wenigstens einer Aussparung (11), die quer, insbesondere senkrecht zur Längsachse (A) des Rohres (10) durch dessen Rohrummantelung eingearbeitet ist und durch welche der Endbereich (22) eines zweiten Rohres (20) im Wesentlichen formschlüssig bis zur Anlage an einen stehen gelassenen Bereich (12) des Materials der Rohrummantelung eingeführt ist.

Ein wesentlicher Vorteil der Erfindung ist, dass die Rohrkonstruktion auf äußerst einfache Weise modular zusammensetzbar ist und bereits ohne weitere Maßnahmen zumindest Druck- und/oder Querkräfte aufnehmen kann, wobei ferner durch das im Wesentlichen formschlüssige Einführen des Endbereiches eines Rohres durch die quer, insbesondere senkrecht, zur Längsachse eines weiteren Rohres eingearbeitete Aussparung bis zur Anlage an einen stehen gelassenen Bereich des Ummantelungsmaterials dieses weiteren Rohres externe Überstände im Wesentlichen vollständig vermeidbar sind.

Vorteilhafte und/oder bevorzugte Ausführungsformen bzw. Weiterbildungen sind Gegenstand der Unteransprüche.

Die erfindungsgemäße Rohrkonstruktion ist vielseitig einsetzbar, insbesondere als Trägervorrichtung, z.B. als Schilderhalter, als Unterkonstruktion, insbesondere für Möbel oder für Geländer. Insbesondere bei entsprechend abgedichtet, erfindungsgemäß zusammengesetzten Rohren ist die Rohrkonstruktion darüber hinaus auch innerhalb eines Flüssigkeitsleitungssystems einsetzbar.

Die Erfindung wird nachfolgend anhand einer bevorzugten Ausführungsform und unter Bezugnahme auf die beigefügten Zeichnungen beispielhaft beschrieben. In den Zeichnungen zeigen:
- Fig. 1A, 1B und 1C: ein Rundrohr mit einer Aussparung, die senkrecht zur Längsachse des Rohres in dessen Rohrummantelung eingetrieben ist, und zwar aus Sicht der einzuführenden Stirnseite, in Profilsicht bzw. in perspektivischer Ansicht,
- Fig. 2: eine erfindungsgemäße Rohrkonstruktion in Explosionsdarstellung, unter Verwendung des Rohres nach Fig. 1A, 1B und 1C, und
- Fig. 3: beispielhaft einen geeigneten Zylinderstift zur zusätzlichen Befestigung und Zentrierung eines in die Aussparung nach Fig. 1A, 1B, 1C und 2 eingeführten Rohres.

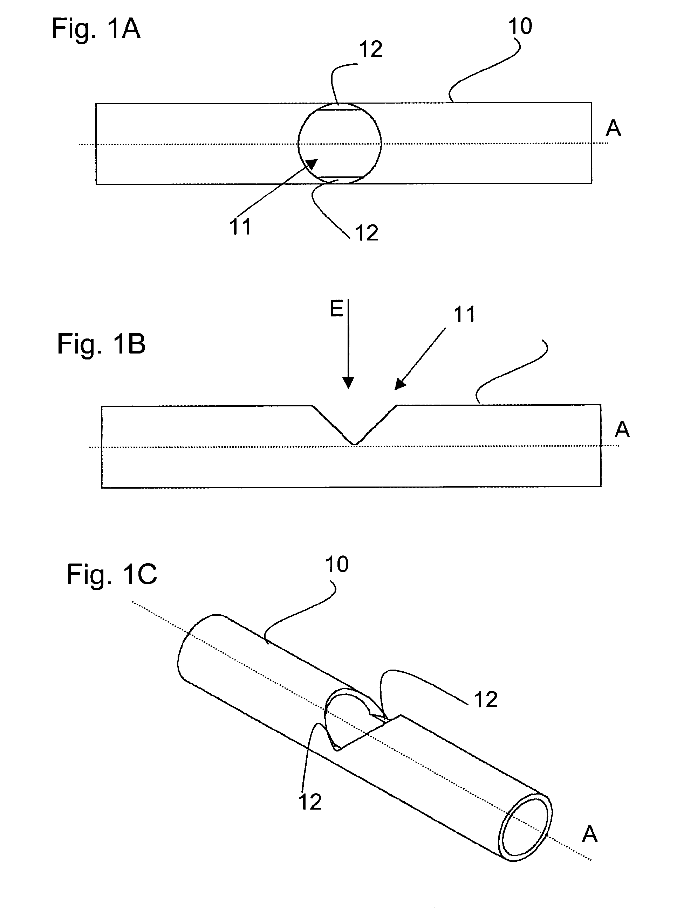

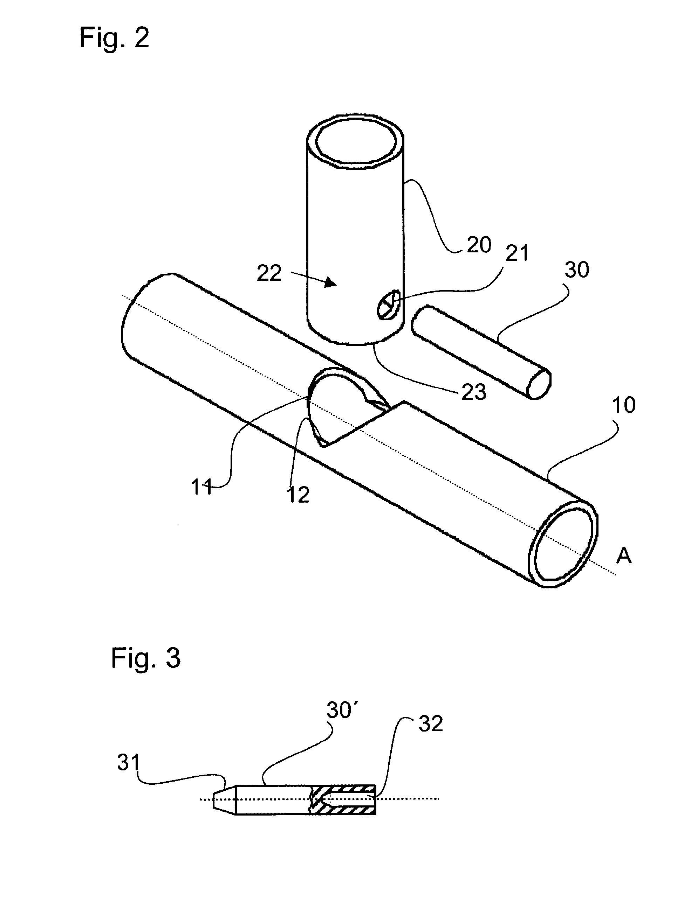

Die Fig. 1A, 1B und 1C zeigen ein Rohr 10 mit einer Aussparung 11, die senkrecht zur Längsachse A des Rohres durch dessen Rohrummantelung eingearbeitet ist. Zwei gegenüberliegende Bereich 12 des Rohrummantelungsmaterials sind hierbei stehen gelassen, die als Anlagebereiche für ein einzuführendes Rohr 20 (Fig. 2) dienen.

Wie insbesondere aus der Fig. 1B zu sehen, weist die Aussparung 11 aufgrund des bevorzugt in Form eines Rundrohres dargestellten Rohres 10 ein Kerben- oder V-förmiges Profil auf. In der dargestellten bevorzugten, jedoch beispielhaften Ausführungsform weist das gemäß Fig. 2 einzuführende Rohr 20 den selben Querschnitt wie das Rohr 10 auf. Für ein im Wesentlichen formschlüssiges Einführen eines Endbereichs 22 des Rohrs 20 durch die Aussparung 11 in das Rohr 10 hinein bis an die Anlagebereiche 12, weist die Aussparung 11 in Einführrichtung E eine lichte Weite auf, die im wesentlichen dem Querschnitt des einzuführenden Rohres 20 entspricht. Zur Ausbildung der Aussparung 11, die sich in diesem Fall bis zur Längsachse A erstreckt, ist zweckmäßiger Weise ein Stirnfräser verwendet worden. Im eingeführten Zustand ist das Rohr 20 folglich bereits ohne weitere Verbindungs- und/oder Fixierungsmaßnahmen derart in der Aussparung 11, insbesondere durch die die Aussparung 11 umgebenden Umrandungsbereiche der Ummantelung des Rohres 10 sowie die Anlagebereiche 12 gehalten, dass zumindest Druckund/oder Querkräfte gegenseitig aufgenommen werden können. Um eine gute Anlage zu gewährleisten, ist die Stirnfläche 23 des Einführbereiches 22 eben und senkrecht zur Längsachse des Rohres 20 ausbildet.

In besonders bevorzugter Ausbildung weist die Aussparung einen Durchmesser derart auf, dass beide Rundrohre 10 und 20 im eingeführten Zustand einen Presssitz miteinander eingehen. Folglich ist in diesem Fall auch eine wesentlich verbesserte Aufnahme von Zug- und/oder Scherkräften und/oder Drehmomenten gewährleistet ohne, dass beispielsweise ein Verschweißen, Verlöten und/oder Verkleben der beiden Rohre 10 und 20 notwendig ist und hieraus resultierende Verbindungs- bzw. Übergangsbereiche und/oder -nähte Umwelteinflüssen ausgesetzt sind.

Um eine zusätzliche Fixierung, insbesondere auch gegen Verkippungen des in das Rohr 10 eingeführten Rohres 20 sicherzustellen, sieht die Erfindung alternativ oder ergänzend eine Art Verzapfung vor, wobei an dem eingeführten Rohr 20 im Endbereich 22 eine Spann- und/oder Halteeinrichtung 30 angeordnet wird, die im eingeführten Zustand des Endbereichs 22 die Rohrummantelung des mit der Aussparung 11 versehenen Rohres 10 hintergreift und bevorzugt, insbesondere zur winkligen Zentrierung, an der Innenfläche der Rohrummantelung des Rohres 10 anliegt.

Bei der zugrundeliegenden bevorzugten Ausführungsform sind hierzu im Einführbereich 22 des Rohres 20 im Wesentlichen parallel zur Längsachse A zwei auf einer Achse liegende Manteldurchgänge 21, insbesondere Bohrungen, ausgebildet, durch welche ein Bolzen 30, Zylinder- oder Spannstift oder eine Spannhülse in praktischer Weise durch Kraftbeaufschlagung in einen Presssitz gezwungen wird.

Für einen Fachmann ist es ersichtlich, dass z.B. auch eine schraubenartig ausgebildete Halteeinrichtung in die Manteldurchgänge entsprechend einbringbar ist, wobei auch die Manteldurchgänge 21 selbst hierzu mit einem Innengewinde ausgebildet sein können.

Fig. 3 zeigt beispielhaft einen zur Befestigung besonders geeigneten Zylinderstift 30', der zum vereinfachten Einführen einen konisch ausgebildeten vorderen Bereich 31 und am gegenüberliegenden Endbereich zum Ansetzen eines zum Eintreiben des Stiftes 30' geeigneten Werkzeuges ein Sackloch 32 aufweist, wobei auch ein einfacher Schlitz ausreichend sein kann.

In alternativer Ausführung ist insbesondere vorgesehen, dass das eingeführte Rohr 20 im Einführbereich 22 und im Wesentlichen parallel zur Längsachse A des mit der Aussparung versehenen Rohres zwei im Wesentlichen gegenüberliegende Manteldurchgänge aufweist, in welche im Innern des Rohres 10 zwei Keile gegenläufig eingeführt und in vorteilhafter Weise durch Verschraubung einer axial durch die Keile geführten Schraube gegeneinander gespannt werden.

Die entsprechend anwendungsspezifisch modular erweiterbare und robuste Rohrkonstruktion ist somit vielseitig einsetzbar, insbesondere auch als Trägervorrichtung, beispielsweise als Schilderhalter oder Lampenhalter oder als Unterkonstruktion, beispielsweise für Möbel, oder für Geländer. Ferner ist die erfindungsgemäße Konstruktion anwendungsspezifisch auch zum Führen und/oder Leiten von bestimmten Flüssigkeiten entsprechend anpassbar.

Die Erfindung umfasst ferner Ausführungsformen, bei denen auch Rohre mit in Bezug auf die Größe und/oder Form unterschiedlichen und/oder eckigen Querschnitten bei entsprechend angepasster Aussparung, auch über eine in einem weniger als 90° zur Längsachse A geneigten Winkel eingearbeiteten Aussparung mit sich somit schräg zur Längsachse A einstellenden Anlagebereichen, ineinander gefügt werden.

## Patentansprüche

1. Rohrkonstruktion, **gekennzeichnet durch** wenigstens ein Rohr (10) mit wenigstens einer Aussparung (11), die quer, insbesondere senkrecht zur Längsachse (A) des Rohres (10) **durch** dessen Rohrummantelung eingearbeitet ist und **durch** welche der Endbereich (22) eines zweiten Rohres (20) im Wesentlichen formschlüssig bis zur Anlage an einen stehen gelassenen Bereich (12) des Materials der Rohrummantelung eingeführt ist.

2. Rohrkonstruktion nach Anspruch 1, ferner **dadurch gekennzeichnet, dass** sich die Aussparung (11) bis zur Längsachse (A) erstreckt.

3. Rohrkonstruktion nach Anspruch 1 oder 2, ferner **dadurch gekennzeichnet, dass** die Rohre (10, 20) den selben Querschnitt oder unterschiedliche Querschnitte aufweisen.

4. Rohrkonstruktion nach Anspruch 1, 2 oder 3, ferner **dadurch gekennzeichnet, dass** die Rohre (10, 20) Rundrohre sind.

5. Rohrkonstruktion nach einem der Ansprüche 1 bis 4, ferner **dadurch gekennzeichnet, dass** die Aussparung (11) in Einführrichtung (E) eine lichte Weite aufweist, die im wesentlichen dem Querschnitt des eingeführten Rohres (20) entspricht.

6. Rohrkonstruktion nach einem der Ansprüche 1 bis 5, ferner **dadurch gekennzeichnet, dass** die Aussparung (11) unter Verwendung eines Stirnfräsers eingetrieben ist.

7. Rohrkonstruktion nach einem der Ansprüche 1 bis 6, ferner **dadurch gekennzeichnet, dass** die Rohre (10, 20) einen Presssitz miteinander eingehen.

8. Rohrkonstruktion nach einem der Ansprüche 1 bis 7, ferner **dadurch gekennzeichnet, dass** an dem eingeführten Rohr (20) eine Spann- und/oder Halteeinrichtung (30, 30') angeordnet ist, die im eingeführten Zustand die Rohrummantelung des mit der Aussparung (11) versehenen Rohres (10) hintergreift.

9. Rohrkonstruktion nach einem der Ansprüche 1 bis 8, ferner **dadurch gekennzeichnet, dass** an dem eingeführten Rohr (20) eine Spann- und/oder Halteeinrichtung (30, 30') angeordnet ist, die im eingeführten Zustand an der Innenfläche der Rohrummantelung des mit der Aussparung (11) versehenen Rohres (10) anliegt.

10. Rohrkonstruktion nach einem der Ansprüche 1 bis 9, ferner **dadurch gekennzeichnet, dass** das eingeführte Rohr (20) im Einführbereich (22) und im Wesentlichen parallel zur Längsachse (A) des mit der Aussparung (11) versehenen Rohres (10) zwei auf einer Achse liegende Manteldurchgänge (21), insbesondere Bohrungen, aufweist, durch welche sich eine Spann- und/oder Halteeinrichtung (30, 30'), insbesondere ein Bolzen (30), Zapfen, Zylinder- oder Spannstift (30') oder eine Spannhülse erstreckt.

11. Rohrkonstruktion nach Anspruch 10, ferner **dadurch gekennzeichnet, dass** die Spann- und/oder Halteeinrichtung (30, 30') mit den Manteldurchgängen (21) einen Presssitz eingeht.

12. Rohrkonstruktion nach einem der Ansprüche 1 bis 9, ferner **dadurch gekennzeichnet, dass** das eingeführte Rohr (20) im Einführbereich (22) und im Wesentlichen parallel zur Längsachse (A) des mit der Aussparung (11) versehenen Rohres (10) zwei im Wesentlichen gegenüberliegende Manteldurchgänge (21), insbesondere Bohrungen, aufweist, in welche zwei Keile gegenläufig eingeführt sind.

13. Rohrkonstruktion nach Anspruch 12, ferner **dadurch gekennzeichnet, dass** das die Keile durch Schraubung gegeneinander gespannt sind.

14. Trägervorrichtung, insbesondere Schilderhalter, umfassend wenigstens eine Rohrkonstruktion nach einem der Ansprüche 1 bis 13.

15. Trägervorrichtung, insbesondere als Unterkonstruktion, insbesondere für Möbel oder für Geländer, umfassend wenigstens eine Rohrkonstruktion nach einem der Ansprüche 1 bis 13.

16. Flüssigkeitsleitungssystem, umfassend wenigstens eine Rohrkonstruktion nach einem der Ansprüche 1 bis 13.
